# EUROPÄISCHE PATENTANMELDUNG

(11) **EP 4 040 571 A1**
(43) Veröffentlichungstag der Anmeldung: **10.08.2022**
(21) Anmeldenummer: 21156041.2
(22) Anmeldetag: 09.02.2021
(51) Int. Cl.: H01M 10/613, H01M 10/6235, H01M 10/6551, H01M 50/247

(54) **AKKUPACK ZUM AUSWECHSELBAREN EINSETZEN IN EINEN AUFNAHMESCHACHT**

(71) Anmelder: Andreas Stihl AG & Co. KG, 71336 Waiblingen (DE)
(72) Erfinder: HENZLER, Andreas, 72669 Unterensingen (DE); PÖHLER, Maria, 71336 Waiblingen (DE); WOLF, Andreas, 71397 Leutenbach (DE); HÄRTEL, Alexander, 71640 Ludwigsburg (DE); GLASER, Jürgen, 76848 Lug (DE)
(74) Vertreter: Wasmuth, Rolf

(57) **Zusammenfassung**

Die Erfindung betrifft einen Akkupack zum auswechselbaren Einsetzen in einen Aufnahmeschacht (3), wobei der Akkupack (1) ein geschlossenes Gehäuse (4) mit Akkuzellen (5) aufweist. Das Gehäuse (4) des Akkupacks (1) weist Hochseiten (6, 7) auf, die sich von einer Stirnseite (9) des Gehäuses (4) in einer Hochrichtung (H) bis zu der anderen Stirnseite (8) des Gehäuses (4) erstrecken. Zur Erzielung einer effektiven Kühlung der Akkuzellen (5) im Gehäuse (4) sind auf der Außenfläche (20) einer Hochseite (6, 7) in Hochrichtung (H) verlaufende Längsrippen (21) vorgesehen, die mit Abstand (a) zueinander liegen. Die Längsrippen (21) begrenzen zusammen mit der Hochseite (6, 7) eine Kühlrinne (22), wobei die Längsrippen (21) in ihrer Höhe (L) derart ausgebildet sind, dass eine Kühlrinne (22) mit einer Innenwand (2) des Aufnahmeschachtes (3) einen Kühlkanal (30) begrenzt.

## Beschreibung

Die Erfindung betrifft einen Akkupack, der zum auswechselbaren Einsetzen in einen durch Innenwände begrenzten Aufnahmeschacht ausgebildet ist. Der Akkupack weist ein Gehäuse auf, in dem mehrere Akkuzellen aufgenommen sind. Das Gehäuse des Akkupacks hat eine Grundform mit Hochseiten und Stirnseiten, wobei sich die Hochseiten in einer Hochrichtung des Gehäuses von der einen Stirnseite des Gehäuses bis zu der anderen Stirnseite des Gehäuses erstrecken.

Es ist bekannt, elektrische Arbeitsgeräte mit einem auswechselbaren Akkupack zu betreiben, die die zum Betrieb des Arbeitsgerätes notwendige elektrische Energie zur Verfügung stellen. Aus der DE 10 2010 045 993 A1 sind Arbeitsgeräte bekannt, bei denen der Akkupack in einen Aufnahmeschacht des Gehäuses des Arbeitsgerätes einzuschieben ist, so dass der Akkupack teilweise oder vollständig im Gehäuse des Arbeitsgerätes aufgenommen ist.

Akkupacks sollen einerseits eine hohe Energiedichte bereitstellen und andererseits einen nur geringen Bauraum beanspruchen. Bei einem kompakt bauenden Akkupack mit hoher Energiedichte muss eine ausreichende Wärmeabfuhr gewährleistet sein, damit die im Akkupack verbauten einzelnen Akkuzellen bei elektrischer Belastung keinen Wärmeschaden erleiden. Akkupacks können im Gehäuse Kühlluftöffnungen zum Eintritt und Austritt von Kühlluft aufweisen mit dem Ziel, möglichst viel Wärme abzuführen. Öffnungen im Gehäuse des Akkupacks bergen jedoch die Gefahr des Schmutzeintrags in das Gehäuse. Ferner können die Öffnungen in den Wandungen des Gehäuses verstopfen.

Der Erfindung liegt die Aufgabe zugrunde das Gehäuse eines auswechselbaren Akkupacks derart auszubilden, dass im Betrieb des Akkupacks eine gute Wärmeabfuhr erzielt ist. Insbesondere bei in einem Aufnahmeschacht eines Arbeitsgerätes aufgenommenen Akkupack soll eine effektive Wärmeabfuhr gewährleistet sein.

Die Aufgabe wird nach den Merkmalen des Anspruchs 1 gelöst.

Nach der Erfindung sind auf der Außenfläche einer Hochseite des Gehäuses zumindest zwei in Hochrichtung verlaufende Längsrippen vorgesehen, die einen quer zur Hochrichtung gemessenen Abstand zueinander aufweisen. Die Längsrippen begrenzen zusammen mit der Hochseite des Gehäuses eine in Hochrichtung des Gehäuses verlaufende Kühlrinne.

Die auf einer Hochseite angeordneten Längsrippen erhöhen die wirksame Wärmeabgabefläche des Gehäuses, wodurch bereits eine gute Wärmeabfuhr erzielt ist. Die Längsrippen sind darüber hinaus in ihrer Höhe derart ausgebildet, dass die Kühlrinne geeignet ist, mit einer Innenwand des Aufnahmeschachtes einen in Hochrichtung des Akkupacks verlaufenden Kühlkanal zu begrenzen. Die Höhe der Längsrippen ist gleich ausgebildet. Im Aufnahmeschacht begrenzen somit je zwei insbesondere benachbarte Längsrippen zusammen mit der Außenfläche einer Hochseite und der Innenwand des Aufnahmeschachtes einen Kühlkanal. Die so ausgebildete Vielzahl an Kühlkanälen gewährleistet eine gezielte Kühlluftführung in Hochrichtung des Akkupacks, wodurch eine gute Wärmeabfuhr gewährleistet ist.

Zweckmäßig wird im Arbeitsgerät im Bereich des Bodens des Aufnahmeschachtes Kühlluft zugeführt. Die insbesondere zwangsweise zum Beispiel durch ein Gebläse zugeführte Kühlluft verteilt sich über die im Aufnahmeschacht liegende Stirnseite des Gehäuses des Akkupacks und tritt auf der Höhe der Stirnseite jeweils in die ausgebildeten Kühlkanäle der Hochseiten ein. Die Kühlluft strömt, durch den Kühlkanal geführt, von der im Aufnahmeschacht liegenden Stirnseite des Gehäuses des Akkupacks zu der gegenüberliegenden, vorteilhaft außerhalb des Gehäuses des Arbeitsgerätes liegenden anderen Stirnseite des Gehäuses des Akkupacks. Im Bereich der anderen Stirnseite des Gehäuses des Akkupacks tritt die in den Kühlkanälen geführte Kühlluft in die Umgebung aus.

Um eine möglichst große Fläche zur Wärmeübertragung bereitzustellen, ist vorgesehen, auf einer Hochseite mehrere Längsrippen anzuordnen, wobei jeweils zwischen zwei benachbarten Längsrippen eine Kühlrinne ausgebildet ist. Die Längsrippen einer Hochseite liegen mit einem quer zur Hochrichtung gemessenen Abstand zueinander. Vorteilhaft liegen mehr als 50% aller Längsrippen einer Hochseite mit einem quer zur Hochrichtung gemessenen gleichen Abstand zueinander. In einer zweckmäßigen Ausführungsform haben alle Längsrippen einen gleichen Abstand voneinander. Es kann vorteilhaft sein, die Längsrippen mit unterschiedlichem Abstand voneinander vorzusehen.

In besonderer Ausgestaltung sind benachbarte Kühlrinnen durch nur eine Längsrippe voneinander getrennt. Eine Längsrippe bildet somit eine Trennwand zwischen zwei Kühlrinnen, so dass die Längsrippe auf beiden Längsseiten mit Kühlluft beaufschlagt ist.

Vorteilhaft erstrecken sich die Kühlrinnen einer Hochseite über die gesamte Höhe des Grundkörpers des Gehäuses des Akkupacks. Die Kühlrinnen verlaufen von der einen Stirnseite des Gehäuses zu der gegenüberliegenden Stirnseite des Gehäuses insbesondere parallel.

Um eine große wirksame Fläche zur Wärmeübertragung zu erzielen, ist vorgesehen, dass über die gesamte Breite einer Hochseite Kühlrinnen ausgebildet sind.

Um einen guten Wärmeübergang aus dem Innenraum des Gehäuses nach außen zu erzielen, sind zumindest die Hochseiten des Gehäuses aus einem wärmeleitenden Material ausgebildet. Ein gut wärmeleitendes und insbesondere leichtes Material ist Aluminium oder eine Aluminiumlegierung.

Eine einfache Konstruktion des Gehäuses des Akkupacks wird dadurch erzielt, dass zumindest eine Hochseite des Gehäuses durch ein äußere Längsrippen aufweisendes Profil gebildet ist. Das Profil kann vorteilhaft ein Strangpressprofil sein, welches für den Zusammenbau eines Gehäuses einfach zu konfektionieren ist.

Vorteilhaft bilden zwei benachbarte Hochseiten des Grundkörpers des Gehäuses ein gemeinsames Gehäusebauteil, wodurch die Anzahl der Bauteile zur Bildung des Gehäuses reduziert ist. Das gemeinsame Gehäusebauteil kann ein äußere Längsrippen aufweisendes L-Profil oder ein äußere Längsrippen aufweisendes U-Profil sein. Dadurch kann erreicht werden, dass das Gehäuse des Akkupacks aus lediglich zwei Gehäusebauteilen für die Hochseiten und jeweils einem Stirnbauteil für eine Stirnseite zusammenzusetzen ist. Der Montageaufwand ist gering.

In Weiterbildung der Erfindung ist eine Stirnseite des Gehäuses als Anschlussseite des Akkupacks ausgebildet, wobei in der Stirnseite elektrische Anschlusskontakte zum Laden oder Entladen der im Gehäuse angeordneten Akkuzellen vorgesehen sind. Die der Anschlussseite gegenüberliegende andere Stirnseite des Gehäuses bildet einen insbesondere nach außen weisenden Deckel des Akkupacks.

Das die untere Stirnseite bildende Stirnbauteil weist einen Rand auf, dessen Außenabmessungen den Außenabmessungen des Grundkörpers des Gehäuses entsprechen. Im Rand sind Durchgangsöffnungen vorgesehen, die als Eintrittsöffnung und/oder Austrittsöffnung einer Kühlrinne dienen können.

In besonderer Ausgestaltung der Erfindung ist ein Arbeitsgerät mit einem Aufnahmeschacht vorgesehen, in den ein erfindungsgemäßer Akkupack eingeschoben ist. Der Akkupack ist in Hochrichtung zumindest über die Länge der Kühlrinnen in dem Aufnahmeschacht derart aufgenommen, dass eine Kühlrinne über zumindest einen Teil ihrer Länge mit einer Innenwand des Aufnahmeschachtes einen Kühlkanal begrenzt. Dabei kann es ausreichend sein, wenn die Innenwand des Aufnahmeschachtes nahe der offenen Kühlrinne liegt. Ein Anliegen der Innenwand an den Längsrippen der Kühlrinne ist nicht zwingend erforderlich, kann aber vorteilhaft sein. Der Abstand zwischen der Innenwand des Aufnahmeschachtes und den Längsrändern der Längsrippen liegt im Bereich weniger Millimeter. Vorteilhaft beträgt der Abstand bzw. der Spalt zwischen der Innenwand des Aufnahmeschachtes und dem Längsrand einer Längsrippe zwischen 0,1 mm und 15 mm, bevorzugt zwischen 1 mm und 5 mm.

Weitere Merkmale der Erfindung ergeben sich aus den weiteren Ansprüchen, der Beschreibung und der Zeichnung, in der ein Ausführungsbeispiel der Erfindung dargestellt ist. Die in den Ansprüchen, der Beschreibungseinleitung und der nachfolgenden Figurenbeschreibung genannten Merkmale sind im Rahmen der Erfindung untereinander beliebig kombinierbar. Die Zeichnungen zeigen in
- Fig. 1: eine Seitenansicht eines erfindungsgemäßen Akkupacks mit einem erfindungsgemäßen Gehäuse,
- Fig. 2: einen Querschnitt durch den Grundkörper des Gehäuses des Akkupacks,
- Fig. 3: einen Querschnitt durch den Grundkörper des Gehäuses nach Fig. 3 mit einem optional im Gehäuse angeordneten Versteifungselement,
- Fig. 4: eine schematische Explosionszeichnung des Akkupacks nach Fig. 1,
- Fig. 5: einen Längsschnitt durch den Akkupack von der einen Stirnseite des Gehäuses zu dessen anderen Stirnseite,
- Fig. 6: in vergrößerter Darstellung die Einzelheit VI in Fig. 5,
- Fig. 7: einen schematischen Querschnitt durch einen in einem Aufnahmeschacht aufgenommenen Akkupack,
- Fig. 8: in vergrößerter Darstellung die Einzelheit VIII aus Fig. 7.

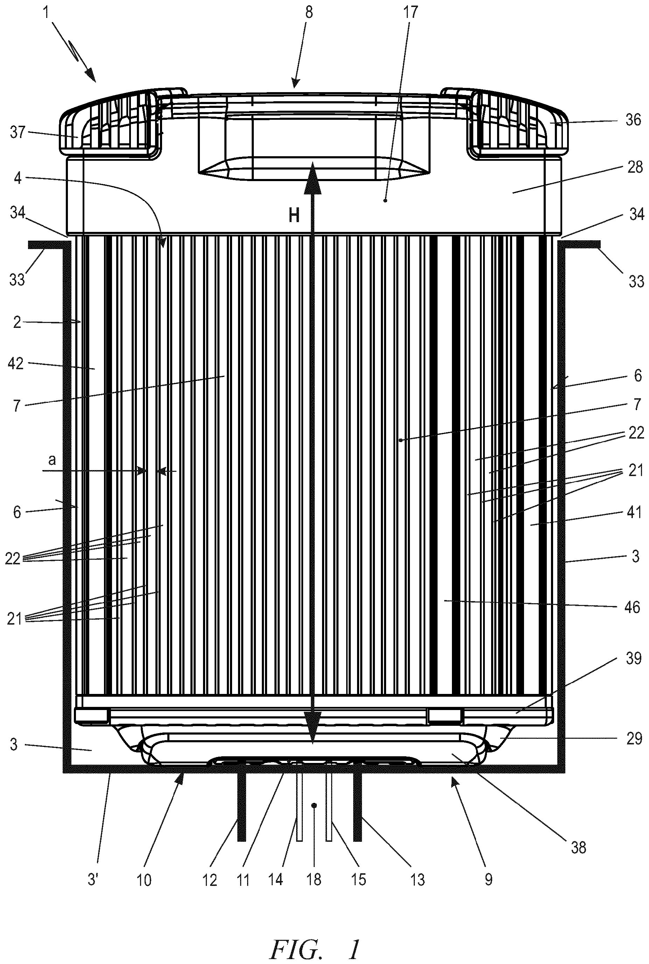

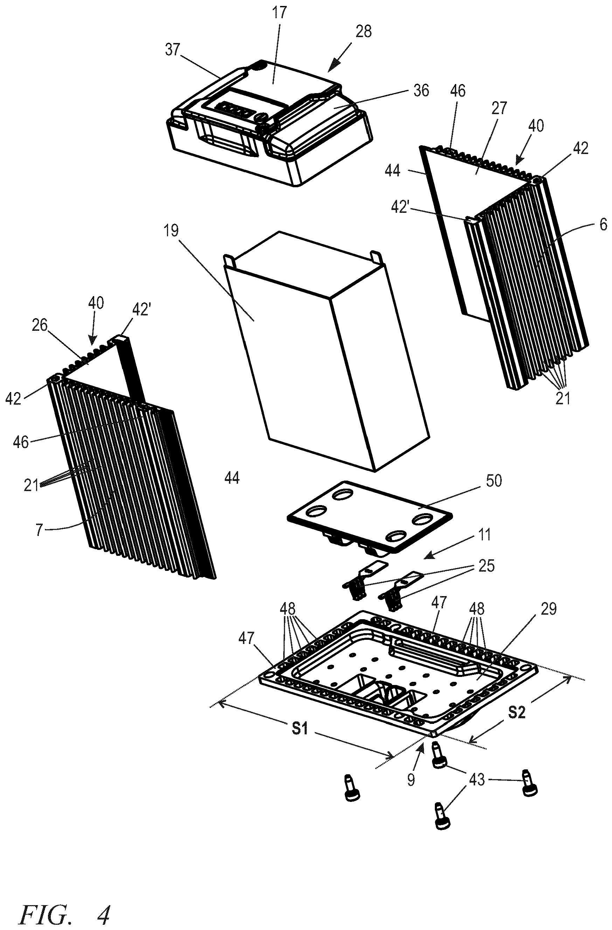

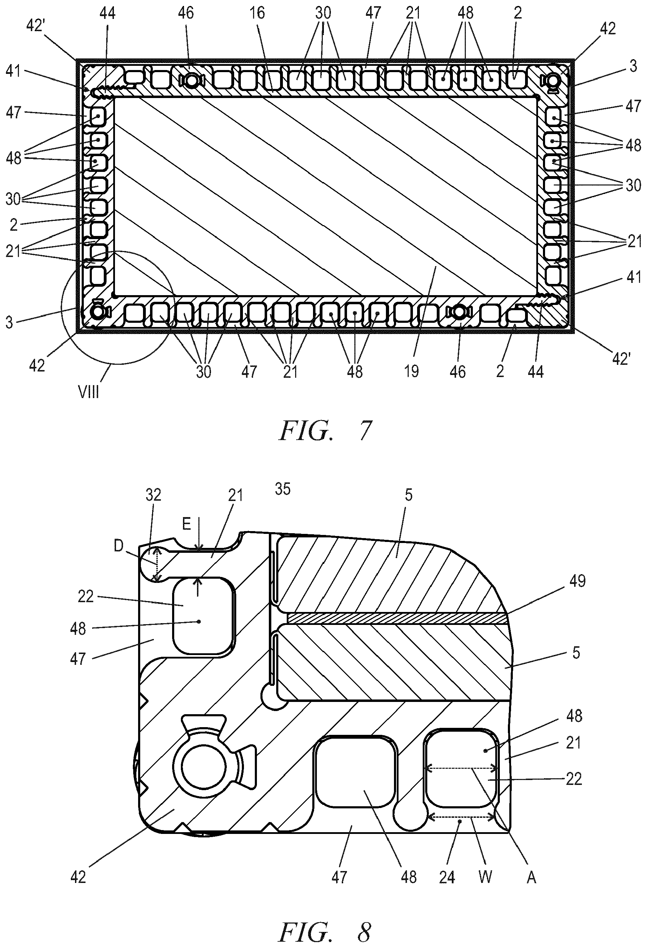

Der in Fig. 1 gezeigte Akkupack 1 weist ein Gehäuse 4 auf, welches aus Hochseiten 6, 7 und aus Stirnseiten 8, 9 zusammengesetzt ist. Die Hochseiten 6, 7 erstrecken sich in Hochrichtung H des Gehäuses 4 von der einen Stirnseite 8 zur anderen Stirnseite 9. Die Stirnseiten 8 und 9 liegen insbesondere rechtwinklig zu den Hochseiten 6, 7 und bilden in Bezug zur Hochrichtung H Abschlussebenen. Im Gehäuse 4 ist eine Mehrzahl von Akkuzellen 5 (Fig. 8) angeordnet, die zusammen ein Zellpaket 19 (Fig. 4) bilden, welche an Leistungskontakten 12, 13 eine Betriebsspannung bereitstellen.

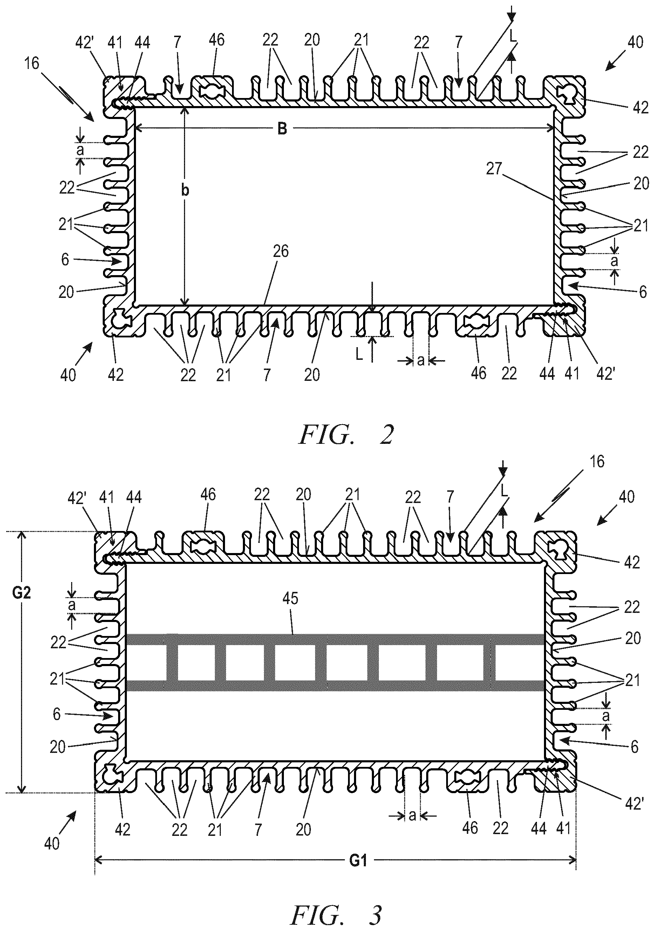

Im gezeigten Ausführungsbeispiel bildet eine Stirnseite 9 eine Anschlussseite 10 des Akkupacks 1. In dieser Anschlussseite 10 sind Anschlusskontakte 11 vorgesehen, die zweckmäßig als Kontaktbuchsen 25 (Fig. 3) ausgebildet sind. Die Gegenkontakte 18 im Boden 3' des Aufnahmeschachtes 3 bestehen aus den Leistungskontakten 12, 13 zum Laden und/oder Entladen des Zellpaketes 19 aus Akkuzellen 5 sowie aus Kommunikationskontakten 14, 15 für die Verbindung des Zellpaketes 19 mit einer Überwachungselektronik eines Ladegerätes oder eines Arbeitsgerätes.

Die prinzipielle Ausbildung des Gehäuses 4 besteht aus einem Grundkörper 16 (Fig. 2), der durch Stirnbauteile 28 und 29 abgeschlossen wird. Der Grundkörper 16 des Gehäuses 4 ist aus der Schnittdarstellung nach Fig. 2 ersichtlich. Der Grundkörper 16 hat einen im Wesentlichen rechteckigen Querschnitt mit Hochseiten 6 und 7, wobei die Hochseiten 7 die Breitseiten des Grundkörpers 16 und die Hochseiten 6 die Schmalseiten des Grundkörpers 16 bilden.

Wie Fig. 2 zeigt, sind auf der Außenfläche 20 einer Hochseite 6, 7 zumindest zwei in Hochrichtung H (Fig. 1) verlaufende Längsrippen 21 vorgesehen. Die Längsrippen 21 liegen mit einem Abstand a zueinander. Zwischen zwei benachbarten Längsrippen 21 ist eine Kühlrinne 22 ausgebildet. Wie die Figuren 1 bis 3 zeigen, sind auf einer Hochseite 6, 7, d. h. auf den Schmalseiten und den Breitseiten des Grundkörpers 16 jeweils mehrere Längsrippen 21 angeordnet. Bevorzugt sind über die gesamte Breite b, B einer Hochseite 6, 7 Längsrippen 21 vorgesehen. Über die gesamte Breite b, B einer Hochseite 6, 7 sind Kühlrinnen 22 vorgesehen.

Die Mehrzahl der Längsrippen 21, insbesondere mehr als 50% der Längsrippen 21 einer Hochseite 6, 7 liegen mit einem quer zur Hochrichtung H gemessenen gleichen Abstand a zueinander. Es kann zweckmäßig sein, die Längsrippen 21 mit unterschiedlichem Abstand zueinander anzuordnen. Insbesondere ist die Ausbildung der Kühlrinnen 22 auf den Außenflächen 20 der Hochseiten 6, 7 derart vorgesehen, dass benachbarte Kühlrinnen 22 durch insbesondere nur eine Längsrippe 21 voneinander getrennt sind.

Wie aus der vergrößerten Darstellung in Fig. 8 ersichtlich, hat eine Längsrippe 21 einen Fußbereich 35 sowie einen Längsrand 32. Der Querschnitt einer Längsrippe 21 hat eine vorzugsweise rechteckige Grundform, wobei die Höhe L einer Längsrippe 21 größer ist als ihre Breite. Der Längsrand 32 einer Längsrippe 21 ist breiter ausgebildet als der Steg der Längsrippe 21 zwischen dem Fußabschnitt 35 und dem Längsrand 32. Der Längsrand 32 hat einen insbesondere runden, vorzugsweise einen kreisrunden Querschnitt. Der Durchmesser D des Querschnitts des runden Längsrandes 32 ist größer als die Dicke E des Steges zwischen dem Fußabschnitt 35 und dem Längsrand 32. Dadurch wird erreicht, dass die Öffnungsweite W einer Kühlrinne 22 zwischen den Längsrändern 32 zweier benachbarter Längsrippen 21 kleiner ist als die durch den Abstand a vorgegebene Breite A einer Kühlrinne 22. Die Kühlrinne 22 weist eine verengte Rinnenöffnung 24 auf, was einem Austritt von in der Kühlrinne 22 geführter Kühlluft entgegenwirkt.

Die Kühlrinnen 22 einer Hochseite 6, 7 erstrecken sich von der einen Stirnseite 9 des Gehäuses 4 bis zu dessen gegenüberliegenden, anderen Stirnseite 8. Die Kühlrinnen 22 haben eine Länge Z und verlaufen zueinander vorzugsweise parallel. Die Kühlrinnen 22 liegen insbesondere parallel zur Hochrichtung H des Akkupacks 1. Die eine Stirnseite 9 des Gehäuses 4 bildet die Anschlussseite 10 des Akkupacks 1 mit den elektrischen Anschlusskontakten 18, während die der Anschlussseite 10 gegenüberliegende andere Stirnseite 8 des Gehäuses 4 einen Deckel 17 des Akkupacks 1 bildet. Die Hochseiten 6, 7 des Gehäuses 4 bestehen aus einem insbesondere wärmeleitenden Material. Bevorzugt bestehen die Hochseiten 6, 7 aus Aluminium oder einer Aluminiumlegierung. In besonderer Ausgestaltung der Erfindung sind die Hochseiten 6, 7 durch ein äußere Längsrippen 21 aufweisendes Profil 40 gebildet. Das Profil 40 ist vorzugsweise ein Strangpressprofil. Die einzelnen Profile 40 können bevorzugt durch eine Steckverbindung 41 unverlierbar zusammengefügt werden. Die Steckverbindung 41 ist nach dem Zusammenfügen unverlierbar verbunden, zweckmäßig reibschlüssig oder formschlüssig verbunden. Es kann vorteilhaft sein, die Steckverbindung 41 zu kleben.

Im gezeigten Ausführungsbeispiel bilden zwei benachbarte Hochseiten 6, 7 des Gehäuses 4 ein gemeinsames Gehäusebauteil 26 bzw. 27. Das gemeinsame Gehäusebauteil 26 oder 27 kann als L-Profil gestaltet sein, wie es in den Figuren 2 bis 4 und 7 dargestellt ist. Es kann zweckmäßig sein, ein gemeinsames Gehäusebauteil als U-Profil auszubilden, welches zur Bildung des Grundkörpers 16 des Gehäuses 4 durch ein Deckelprofil geschlossen wird. So kann das U-Profil aus zwei Breitseiten (Hochseiten 7) und einer Schmalseite (Hochseite 6) gebildet sein, wobei das Deckelprofil dann eine Schmalseite (Hochseite 6) des Grundkörpers 16 des Gehäuses 4 bildet. Das U-Profil kann aber auch aus einer Breitseite (Hochseite 7) und zwei Schmalseiten (Hochseiten 6) gebildet sein, wobei dann das Deckelprofil eine Breitseite (Hochseite 7) bildet. Auch andere Gestaltungen können zweckmäßig sein.

Vorteilhaft ist das Gehäuse 4 des Akkupacks 1 aus zwei Gehäusebauteilen 26, 27 für die Hochseiten 6, 7 und jeweils einem Stirnbauteil 28, 29 für eine Stirnseite 8, 9 zusammengesetzt, wie beispielhaft in Fig. 4 gezeigt ist.

Der vorteilhaft aus Profilen 40 zusammengesetzte Grundkörper 16 weist jeweils in den Ecken ausgebildete Pfosten 42 und 42' auf. Die Pfosten 42 liegen bezogen auf den rechteckigen Querschnitt einander diagonal gegenüber. Entsprechend liegen die Pfosten 42' bezogen auf den rechteckigen Querschnitt des Grundkörpers 16 einander diametral gegenüber. Dabei weisen die einen an gegenüberliegenden Ecken vorgesehenen Pfosten 42 einen hohlen Kern auf, so dass stirnseitig in die Pfosten 42 Befestigungsschrauben 43 eingedreht werden können. Derartige Befestigungsschrauben 43 sind in Fig. 4 zum Verbinden der Stirnseiten 9 mit dem Grundkörper 16 des Gehäuses 4 dargestellt.

Die einander gegenüberliegenden Pfosten 42' sind als Steckaufnahme der Steckverbindung 41 ausgebildet. In die Steckaufnahme greift der Längsrand 44 einer Hochseite 6 oder 7 des Grundkörpers 16 ein. Im gezeigten Ausführungsbeispiel greift der Längsrand 44 der Breitseite (Hochseite 7) in die Steckaufnahme des Pfostens 42' ein.

Es kann zweckmäßig sein, im Grundkörper 16 des Gehäuses 4 ein Versteifungselement 45 anzuordnen, um die mechanische Steifigkeit des Gehäuses 4 an sich zu erhöhen. Das Versteifungselement 45 kann sich über die gesamte Höhe in Hochrichtung H des Akkupacks 1 erstrecken. Das Versteifungselement 45 kann vorteilhaft auch für eine Kühlluftführung oder zur Führung von elektrischen Leitungen genutzt werden.

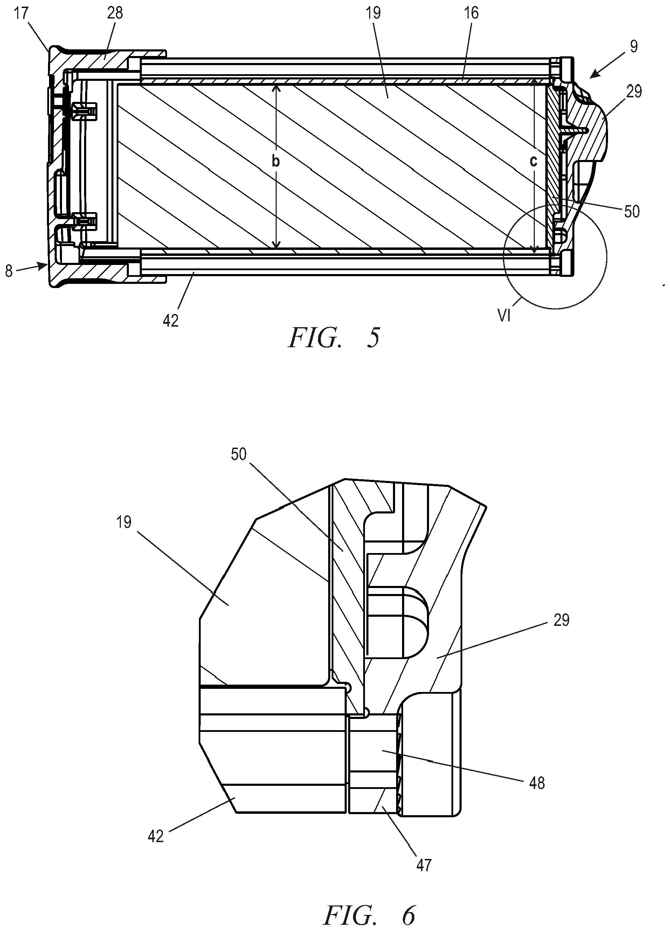

Wie Fig. 5 zeigt, ist eine Stirnplatte 50 der Stirnseite 9 mit dem Grundkörpers 16 dichtend verbunden. Insbesondere liegt die Stirnplatte 50 an dem stirnseitigen Ende der Hochseiten 6, 7 an, ragt jedoch nicht über die Außenfläche 20 der Hochseiten 6, 7 hinaus. Die Stirnplatte 50 wird von dem Stirnbauteil 29 mechanisch am Grundkörpers 16 gesichert gehalten. Das Stirnbauteil 29 wird mittels Befestigungsschrauben 43 (Fig. 4) mit dem Grundkörper 16 verschraubt. Die Befestigungsschrauben 43 greifen in den hohlen Kern der in den Ecken vorgesehenen Pfosten 42 ein. In die Pfosten 42' ist ein stirnseitiges Einschrauben von Befestigungselementen nicht möglich, da die Pfosten 42' als Steckverbindung 41 ausgebildet sind. Vorteilhaft ist daher vorgesehen, benachbart zu einem Längsrand 44 der Steckverbindung 41 auf der Außenfläche 20 einer Hochseite 6, 7 einen Befestigungspfosten 46 vorzusehen, der zum stirnseitigen Einschrauben von Befestigungsschrauben 43 dient. Der Befestigungsposten 46 verläuft zweckmäßig über die gesamte Höhe Z des Grundkörpers 16 insbesondere parallel zu den Pfosten 42 und 42'. Das Stirnbauteil 29 kann somit an vier Befestigungspunkten mit dem Grundkörper 16 festgelegt werden.

Der Grundkörper 16 hat eine Breite G1 und eine Tiefe G2 (Fig. 3). Das Stirnbauteil 29 hat eine Breite S1 und eine Tiefe S2 (Fig. 4). Die Auslegung ist so getroffen, dass die Breite S1 des Stirnbauteils 29 der Breite G1 des Grundkörpers 16 und die Tiefe S2 des Stirnbauteils 29 der Tiefe G2 des Grundkörpers 16 entspricht. Das Stirnbauteil 29 deckt somit die Enden der Kühlrinnen 22 ab. Im Rand 47 des Stirnbauteils 29 sind Durchgangsöffnungen 48 vorgesehen, die jeweils deckungsgleich zu einer Kühlrinne 22 liegen. Die im Rand 47 des Stirnbauteils 29 ausgebildeten Durchgangsöffnungen 48 bilden ein stirnseitiges Ende einer Kühlrinne 22.

Wie Fig. 5 zeigt, übergreift das einen Deckel 17 bildende Stirnbauteil 28 den Grundkörpers 16, wobei die Kühlrinnen 22 im Stirnbauteil 28 des Deckels 17 enden. Es kann zweckmäßig sein, über die Kühlrinnen 22 in den Deckel 17 strömende Kühlluft über Kühlluftauslassöffnungen im Deckel 17 abzuführen. Die in den Deckel 17 einströmende Kühlluft kann auch zur Kühlung von im Deckel angeordneter Elektronik genutzt werden.

In Fig. 1 ist schematisch der Akkupack 1 gezeigt, der über den Großteil seiner Länge in den Aufnahmeschacht 3 eines Arbeitsgerätes eingeschoben ist. Die elektrische Kontaktierung des Akkupacks 1 mit dem Arbeitsgerät erfolgt über die im Boden 3' des Aufnahmeschachtes 3 angeordneten Anschlusskontakte 18. Wie beispielhaft dargestellt, ist der Akkupack 1 über etwa 60% bis 90% seiner Länge in dem Aufnahmeschacht 3 aufgenommen. Vorteilhaft ist zwischen dem unteren Rand 31 des den Deckel 17 bildenden Stirnbauteils 28 und dem oberen Umfangsrand 33 des Aufnahmeschachtes 3 ein Spalt 34 ausgebildet.

Die Längsrippen 21 weisen eine Höhe L auf, die derart ausgebildet ist, dass die Kühlrinne 22 von der Innenwand 2 abgedeckt wird (Figuren 1 und 7). Dadurch wird aus einer Kühlrinne 22 ein Kühlkanal 30, der im Bereich des Bodens 3' des Aufnahmeschachtes 3 beginnt und bis zu dem einen Deckel 17 bildenden Stirnbauteil 28 geführt ist. Zur Ausbildung des Kühlkanals 30 ist ein dichtes Anliegen der Innenwand 2 des Aufnahmeschachtes 3 an den Längsrändern 32 der Längsrippen 21 nicht erforderlich. Es ist ausreichend, wenn die Innenwand 2 mit einem geringen Abstand zu den Längsrippen 21 liegt. Je geringer der Abstand der Innenwand 2 zu den Längsrippen 21 ist, desto besser wird eine gerichtete Kühlluftströmung vom Boden 3' des Aufnahmeschachtes 3 zur oberen Stirnseite 8 des Akkupacks 1 erzielt. Zweckmäßig liegt die Größe des Spaltes zwischen dem Längsrand 32 einer Längsrippe 21 und der Innenwand 2 des Aufnahmeschachtes 3 in einem Bereich von 0,1 mm bis 15 mm. Eine besonders gute Kühlleistung wird erzielt, wenn der Spalt 0,1 mm bis 5 mm groß ist, insbesondere 0,2 mm bis 3 mm groß ist.

Es kann vorteilhaft sein, im Bereich des Bodens 3' des Aufnahmeschachtes 3 Kühlluft zuzuführen, z. B. über ein Gebläse zuzuführen, so dass die zugeführte Kühlluft über die Kühlkanäle 30 und vorteilhaft über einen Spalt 34 am oberen Rand des Aufnahmeschachtes aus dem Aufnahmeschacht 3 abgeführt wird. Die beschriebene Ausgestaltung des Grundkörpers 16 des Akkupacks erzielt auch eine Konvektionsströmung aufgrund der sich in den Kühlrinnen 22 erwärmenden und zum Umfangsrand 33 des Aufnahmeschachtes 3 aufsteigenden Luft. Durch die gezielte Kühlluftführung mittels der Kühlrinnen 22 bzw. der im Zusammenwirken mit der Innenwand 2 des Aufnahmeschachtes 3 gebildeten Kühlkanäle 30 ist eine gute Wärmeabführung der im Betrieb anfallenden Abwärme des Zellpakets 19 gewährleistet.

Die gerichtete Kühlluftführung wird insbesondere durch das Zusammenwirken der Innenwand 2 des Akkuschachts 3 mit der besonderen äußeren Gestaltung des Gehäuses 4 mit Kühlrinnen 22 erzielt. Der Akkupack 1 ist in dem durch Innenwände 2 begrenzten Aufnahmeschacht 3 eines Arbeitsgerätes eingesetzt, wobei der Akkupack 1 ein Gehäuse 4 aufweist, in dem mehrere Akkuzellen 5 aufgenommen sind. Das geschlossene Gehäuse 4 des Akkupacks 1 hat einen Grundkörper 16 mit Hochseiten 6, 7 und Stirnseiten 8, 9. Dabei kann vorteilhaft eine Stirnseite 9 des Gehäuses 4 als Anschlussseite 10 des Akkupacks 1 ausgebildet sein. Zweckmäßig sind auf dieser die Anschlussseite 10 bildenden Stirnseite 9 des Gehäuses 4 elektrische Anschlusskontakte 11 vorgesehen. Derartige Anschlusskontakte 11 können z. B. zum Laden oder Entladen der im Gehäuse 4 angeordneten Akkuzellen 5 dienen. Die Hochseiten 6, 7 des Gehäuses 4 erstrecken sich von der einen Stirnseite 9 in einer Hochrichtung H bis zu der anderen Stirnseite 8 des Gehäuses 4. Da auf der Außenfläche 20 einer Hochseite 6, 7 des Gehäuses 4 zumindest zwei in Hochrichtung H verlaufende Längsrippen 21 vorgesehen sind, und die Längsrippen 21 mit einem quer zur Hochrichtung H gemessenen Abstand a zueinander liegen, begrenzen die Längsrippen 21 zusammen mit der Hochseite 6, 7 eine in Hochrichtung H des Gehäuses 4 verlaufende Kühlrinne 22 einer Länge Z. Die Längsrippen 21 sind in ihrer Höhe L derart ausgebildet, dass die Kühlrinne 22 mit der Innenwand 2 des Aufnahmeschachtes 3 einen in Hochrichtung H das Akkupacks 1 verlaufenden Kühlkanal 30 ausbilden.

Vorteilhaft ist der Akkupack 1 mit Bumpern 36, 37, 38, 39 aus elastischem Material versehen, die Stoßbelastungen auf dem Akkupack 1 abschwächen sollen. So weist das den Deckel 17 bildende Stirnbauteil 28 an den Schmalseiten Bumper 36 und 37 auf. Das eine Anschlussseite 10 bildende Stirnbauteil 29 weist einen äußeren Bumper 38 auf. Ferner trägt das untere Stirnbauteil 29 einen Rahmenbumper 39.

Wie die Figuren 7 und 8 zeigen, ist der Innenraum des Gehäuses 4 eng mit Akkuzellen 5 bestückt. Die Akkuzellen sind vorteilhaft Lithium-Zellen, zum Beispiel in Form von Pouch-Zellen. Diese Zellen ändern ihr Volumen mit ihrem Ladezustand, weshalb vorteilhaft vorgesehen ist, zwischen je zwei benachbarten Akkuzellen 5 eine elastische Schicht 49 anzuordnen (Fig. 8). Diese elastische Schicht kann zum Beispiel ein gut wärmeleitendes Material sein, um auch einen guten Wärmetransport zu den Außenwänden des Akkupacks zu erzielen. Die Schicht 49 kann insbesondere Moosgummi, zweckmäßig gut wärmeleitendes Moosgummi sein.

## Patentansprüche

1. Akkupack, ausgebildet zum auswechselbaren Einsetzen in einen durch Innenwände (2) begrenzten Aufnahmeschacht (3), und der Akkupack (1) ein Gehäuse (4) aufweist, in dem mehrere Akkuzellen (5) aufgenommen sind, und das Gehäuse (4) des Akkupacks (1) eine Grundform mit Hochseiten (6, 7) und Stirnseiten (8, 9) aufweist, wobei sich die Hochseiten (6, 7) in einer Hochrichtung (H) des Gehäuses (4) von der einen Stirnseite (9) des Gehäuses (4) bis zu der anderen Stirnseite (8) des Gehäuses (4) erstrecken, **dadurch gekennzeichnet,**
**dass** auf der Außenfläche (20) einer Hochseite (6, 7) des Gehäuses (4) zumindest zwei in Hochrichtung (H) verlaufende Längsrippen (21) vorgesehen sind, und die Längsrippen (21) mit einem quer zur Hochrichtung (H) gemessenen Abstand (a) zueinander liegen,
**dass** die Längsrippen (21) zusammen mit der Außenfläche (20) der Hochseite (6, 7) eine in Hochrichtung (H) des Gehäuses (4) verlaufende Kühlrinne (22) begrenzen,
und die Längsrippen (21) in ihrer Höhe (L) derart ausgebildet sind, dass die Kühlrinne (22) geeignet ist, mit der Innenwand (2) des Aufnahmeschachtes (3) einen in Hochrichtung (H) des Akkupacks (1) verlaufenden Kühlkanal (30) zu begrenzen.

2. Akkupack nach Anspruch 1,
**dadurch gekennzeichnet, dass** auf einer Hochseite (6, 7) mehrere Längsrippen (21) angeordnet sind, und zwischen zwei benachbarten Längsrippen (21) jeweils eine Kühlrinne (22) ausgebildet ist.

3. Akkupack nach Anspruch 2,
**dadurch gekennzeichnet, dass** mehr als 50% der Längsrippen (21) einer Hochseite (6, 7) mit einem quer zur Hochrichtung (H) gemessenen gleichen Abstand (a) zueinander liegen.

4. Akkupack nach Anspruch 2,
**dadurch gekennzeichnet, dass** benachbarte Kühlrinnen (22) durch nur eine Längsrippe (21) voneinander getrennt sind.

5. Akkupack nach Anspruch 2,
**dadurch gekennzeichnet, dass** die Kühlrinnen (22) einer Hochseite (6, 7) von der einen Stirnseite (8) des Gehäuses (4) zu der gegenüberliegenden Stirnseite (9) des Gehäuses (4) zueinander parallel verlaufen.

6. Akkupack nach Anspruch 2,
**dadurch gekennzeichnet, dass** über die gesamte Breite (B) einer Hochseite (6) Kühlrinnen (22) ausgebildet sind.

7. Akkupack nach Anspruch 1,
**dadurch gekennzeichnet, dass** zumindest eine Hochseiten (6, 7) des Gehäuses (4) aus einem wärmeleitenden Material, insbesondere aus Aluminium, einer Aluminiumlegierung oder einer Magnesiumlegierung gebildet ist.

8. Akkupack nach Anspruch 1,
**dadurch gekennzeichnet, dass** eine Hochseite (6, 7) des Gehäuses (4) des Akkupacks (1) durch ein äußere Längsrippen (21) aufweisendes Profil (40) gebildet ist.

9. Akkupack nach Anspruch 8,
**dadurch gekennzeichnet, dass** das Profil (40) ein Strangpressprofil oder ein Druckgussprofil ist.

10. Akkupack nach Anspruch 1,
**dadurch gekennzeichnet, dass** zwei benachbarte Hochseiten (6, 7) des Gehäuses (4) ein gemeinsames Gehäusebauteil (26, 27) des Gehäuses (4) des Akkupacks (1) bilden.

11. Akkupack nach Anspruch 10,
**dadurch gekennzeichnet, dass** das gemeinsame Gehäusebauteil (26, 27) ein äußere Längsrippen (21) aufweisendes L-Profil oder ein U-Profil ist.

12. Akkupack nach Anspruch 11,
**dadurch gekennzeichnet, dass** das Gehäuse (4) des Akkupacks (1) aus zwei Gehäusebauteilen (26, 27) für die Hochseiten (6, 7) und jeweils einem Stirnbauteil (28, 29) für eine Stirnseite (8, 9) zusammengesetzt ist.

13. Akkupack nach Anspruch 12,
**dadurch gekennzeichnet, dass** das Stirnbauteil (28, 29) einen Rand (47) aufweist, und in dem Rand (47) Durchgangsöffnungen (48) vorgesehen sind, die eine Eintrittsöffnung und/oder Austrittsöffnung einer Kühlrinne (22) bilden.

14. Akkupack nach Anspruch 1,
**dadurch gekennzeichnet, dass** eine Stirnseite (9) des Gehäuses (4) als Anschlussseite (10) des Akkupacks (1) ausgebildet ist, in der elektrische Anschlusskontakte (18) vorgesehen sind und die der Anschlussseite (10) gegenüberliegende andere Stirnseite (8) des Gehäuses (4) einen Deckel (17) des Akkupacks (1) bildet.

15. Arbeitsgerät mit einem Aufnahmeschacht (3), in den ein Akkupack (1) nach Anspruch 1 eingeschoben ist,
**dadurch gekennzeichnet, dass** der Akkupack (1) in Hochrichtung (H) zumindest über die Länge (Z) der Kühlrinnen (22) in dem Aufnahmeschacht (3) derart aufgenommen ist, dass eine Kühlrinne (22) über zumindest einen Teil ihrer Länge (Z) mit einer Innenwand (2) des Aufnahmeschachtes (3) einen Kühlkanal (30) begrenzt.
